# EUROPEAN PATENT APPLICATION

(11) **EP 3 054 224 A1**
(43) Date of publication of application: **10.08.2016**
(21) Application number: 16154449.9
(22) Date of filing: 05.02.2016
(51) Int. Cl.: F24F 1/02, F24F 12/00

(54) **AIR CONDITIONER**

(30) Priority: 09.02.2015 KR 20150019737
(71) Applicant: LG Electronics Inc., Seoul 07336 (KR)
(72) Inventor: HA, Doyong, 08592 Seoul (KR); CHOI, Jaehyuk, 08592 Seoul (KR); OH, Seyoon, 08592 Seoul (KR); YOO, Yoonho, 08592 Seoul (KR)
(74) Representative: Vossius & Partner Patentanwälte Rechtsanwälte mbB

(57) **Abstract**

An air conditioner is disclosed. The air conditioner includes a suction chamber provided with an indoor suction port, through which indoor air is suctioned, an outdoor suction port, through which outdoor air is suctioned, the suction chamber being configured to selectively adjust a ratio of outdoor air to be suctioned to indoor air to be suctioned, an outdoor discharge chamber disposed at one side of the suction chamber, the outdoor discharge chamber being provided with an outdoor discharge port, through which air in the suction chamber is discharged outdoors, and an indoor discharge chamber disposed at the other side of the suction chamber, the indoor discharge chamber being provided with an indoor discharge port, through which air in the suction chamber is discharged indoors. When discharging indoor air, it is possible to adjust a proportion of outdoor air introduced indoors.

## Description

The present invention relates to an air conditioner.

In general, an air conditioner is an apparatus that cools or heats a room or conditions air using a refrigeration cycle of a refrigerant including a compressor, a condenser, an expansion device, and an evaporator in order to provide a more comfortable indoor environment to a user.

An example of the air conditioner is an air handling unit, which is coupled to an air conditioning system in a building to mix outdoor air with indoor air and to supply the mixed air into a room.

In a conventional air conditioner, however, when outdoor air is supplied into a room, the outdoor air is dehumidified through a refrigeration cycle using a refrigerant, with the result that power consumption is increased.

An example of such a conventional air conditioner is disclosed in Korean Patent Application Publication No. 10-2010-0128812.

Therefore, the present invention has been made in view of the above problems, and it is an object of the present invention to provide an air conditioner that is capable of dehumidifying outdoor air with low power consumption.

It is another object of the present invention to provide an air conditioner that is capable of adjusting a proportion of outdoor air.

In accordance with the present invention, the above and other objects can be accomplished by the provision of an air conditioner including a suction chamber provided with an indoor suction port, through which indoor air is suctioned, an outdoor suction port, through which outdoor air is suctioned, the suction chamber being configured to selectively adjust a ratio of outdoor air to be suctioned to indoor air to be suctioned, an outdoor discharge chamber disposed at one side of the suction chamber, the outdoor discharge chamber being provided with an outdoor discharge port, through which air in the suction chamber is discharged outdoors, and an indoor discharge chamber disposed at the other side of the suction chamber, the indoor discharge chamber being provided with an indoor discharge port, through which air in the suction chamber is discharged indoors.

The suction chamber may include a first heat exchange chamber having a first heat exchanger, operating as one selected from between an evaporator and a condenser, disposed therein, the first heat exchange chamber being connected to the outdoor discharge chamber and to the indoor discharge chamber, a second heat exchange chamber having a second heat exchanger, operating as the other selected from between the evaporator and the condenser, disposed therein, the second heat exchange chamber being connected to the outdoor discharge chamber and to the indoor discharge chamber, an outdoor suction selection chamber connected to the outdoor suction port for allowing the outdoor air to be introduced thereinto and supplying the outdoor air to at least one selected from between the first heat exchange chamber and the second heat exchange chamber, and an indoor suction selection chamber connected to the indoor suction port for allowing the indoor air to be introduced thereinto and supplying the indoor air to at least one selected from between the first heat exchange chamber and the second heat exchange chamber.

The suction chamber may further include a first outdoor suction damper disposed between the outdoor suction selection chamber and the first heat exchange chamber for controlling a flow rate of outdoor air flowing from the outdoor suction selection chamber to the first heat exchange chamber and a second outdoor suction damper disposed between the outdoor suction selection chamber and the second heat exchange chamber for controlling a flow rate of outdoor air flowing from the outdoor suction selection chamber to the second heat exchange chamber.

The suction chamber may further include a first indoor suction damper disposed between the indoor suction selection chamber and the first heat exchange chamber for controlling a flow rate of indoor air flowing from the indoor suction selection chamber to the first heat exchange chamber and a second indoor suction damper disposed between the indoor suction selection chamber and the second heat exchange chamber for controlling a flow rate of indoor air flowing from the indoor suction selection chamber to the second heat exchange chamber.

The suction chamber may further include a first outdoor heat exchange damper for selectively opening and closing the first heat exchange chamber and the outdoor discharge chamber and a second outdoor heat exchange damper for selectively opening and closing the second heat exchange chamber and the outdoor discharge chamber.

The suction chamber may further include a first indoor heat exchange damper for selectively opening and closing the first heat exchange chamber and the indoor discharge chamber and a second indoor heat exchange damper for selectively opening and closing the second heat exchange chamber and the indoor discharge chamber.

The first heat exchange chamber and the second heat exchange chamber may be partitioned from each other by a heat exchange partition wall.

The first heat exchange chamber may be partitioned into a first inlet chamber and a first outlet chamber by the first heat exchanger, the first inlet chamber being connected to the outdoor suction selection chamber and to the indoor suction selection chamber, the first outlet chamber being connected to the outdoor discharge chamber and to the indoor discharge chamber.

The second heat exchange chamber may be partitioned into a second inlet chamber and a second outlet chamber by the second heat exchanger, the second inlet chamber being connected to the outdoor suction selection chamber and to the indoor suction selection chamber, the second outlet chamber being connected to the outdoor discharge chamber and to the indoor discharge chamber.

The suction chamber may include a damper partition wall for partitioning the interior of the suction chamber into an upper part and a lower part such that suction selection chambers are formed in the upper part of the suction chamber and heat exchange chambers are formed in the lower part of the suction chamber, a selection chamber partition wall coupled to an upper side of the damper partition wall for partitioning the suction selection chambers into an outdoor suction selection chamber and an indoor suction selection chamber in leftward and rightward directions, and a heat exchange partition wall coupled to a lower side of the damper partition wall for partitioning the heat exchange chambers into a first heat exchange chamber and a second heat exchange chamber in forward and rearward directions, wherein the first heat exchange chamber may have a first heat exchanger, operating as one selected from between an evaporator and a condenser, disposed therein, the first heat exchange chamber being connected to the outdoor discharge chamber and to the indoor discharge chamber, the second heat exchange chamber may have a second heat exchanger, operating as the other selected from between the evaporator and the condenser, disposed therein, the second heat exchange chamber being connected to the outdoor discharge chamber and to the indoor discharge chamber, the outdoor suction selection chamber may be connected to the outdoor suction port for allowing the outdoor air to be introduced thereinto and supplying the outdoor air to at least one selected from between the first heat exchange chamber and the second heat exchange chamber, and the indoor suction selection chamber may be connected to the indoor suction port for allowing the indoor air to be introduced thereinto and supplying the indoor air to at least one selected from between the first heat exchange chamber and the second heat exchange chamber.

The outdoor suction selection chamber may be formed in the forward and rearward directions, the outdoor suction selection chamber being stacked on upper sides of the first heat exchange chamber and the second heat exchange chamber, and the indoor suction selection chamber may be formed in the forward and rearward directions, the indoor suction selection chamber being stacked on the upper sides of the first heat exchange chamber and the second heat exchange chamber.

The suction chamber may further include a first outdoor suction damper disposed in the damper partition wall for selectively opening and closing the outdoor suction selection chamber and the first heat exchange chamber, a second outdoor suction damper disposed in the damper partition wall for selectively opening and closing the outdoor suction selection chamber and the second heat exchange chamber, a first indoor suction damper disposed in the damper partition wall for selectively opening and closing the indoor suction selection chamber and the first heat exchange chamber, and a second indoor suction damper disposed in the damper partition wall for selectively opening and closing the indoor suction selection chamber and the second heat exchange chamber.

An opening degree of the first outdoor suction damper and an opening degree of the first indoor suction damper may be adjusted in order to adjust a mixing ratio of indoor air and outdoor air to be supplied to the first heat exchange chamber, and an opening degree of the second outdoor suction damper and an opening degree of the second indoor suction damper may be adjusted to adjust a mixing ratio of indoor air and outdoor air to be supplied to the second heat exchange chamber.

The first heat exchange chamber may be partitioned into a first inlet chamber and a first outlet chamber by the first heat exchanger, the first inlet chamber being connected to the outdoor suction selection chamber and to the indoor suction selection chamber, the first outlet chamber being connected to the outdoor discharge chamber and to the indoor discharge chamber, and the second heat exchange chamber may be partitioned into a second inlet chamber and a second outlet chamber by the second heat exchanger, the second inlet chamber being connected to the outdoor suction selection chamber and to the indoor suction selection chamber, the second outlet chamber being connected to the outdoor discharge chamber and to the indoor discharge chamber.

The suction chamber may further include a first outdoor heat exchange damper for selectively opening and closing the first outlet chamber and the outdoor discharge chamber, a second outdoor heat exchange damper for selectively opening and closing the second outlet chamber and the outdoor discharge chamber, a first indoor heat exchange damper for selectively opening and closing the first outlet chamber and the indoor discharge chamber, and a second indoor heat exchange damper for selectively opening and closing the second outlet chamber and the indoor discharge chamber.

The embodiments will be described in detail with reference to the following drawings in which like reference numerals refer to like elements wherein:
FIG. 1 is a perspective view showing the interior of an air conditioner according to a first embodiment of the present invention;
FIG. 2 is a perspective view showing the interior of a suction chamber shown in FIG. 1;
FIG. 3 is a view showing a first example in which the conditioner according to the first embodiment of the present invention operates in a circulation mode;
FIG. 4 is a view showing a second example in which the conditioner according to the first embodiment of the present invention operates in the circulation mode;
FIG. 5 is a view showing a first example in which the conditioner according to the first embodiment of the present invention operates in a ventilation mode;
FIG. 6 is a view showing a second example in which the conditioner according to the first embodiment of the present invention operates in the ventilation mode;
FIG. 7 is a view showing a first example in which the conditioner according to the first embodiment of the present invention operates in a mixed ventilation mode; and
FIG. 8 is a view showing a second example in which the conditioner according to the first embodiment of the present invention operates in the mixed ventilation mode.

The present invention will be described in detail with reference to the accompanying drawings.

In the following description of the present invention, a detailed description of known functions or configurations incorporated herein will be omitted when it may make the subject matter of the present invention rather unclear. The same terms may be denoted by different reference numerals if the terms indicate different parts.

The terms used in the following description are terms defined taking into consideration the functions obtained in accordance with the present invention. The definitions of these terms should be determined based on the whole content of this specification because they may be changed in accordance with the intentions of users, such as experimenters and measurers, or usual practices.

In this specification, the terms "first," "second," etc. are used to describe various elements. However, the elements are not limited by the terms. The terms are used only to distinguish one element from another element. For example, a first element may be named a second element, and a second element may be named a first element, without departing from the scope of right of the present invention. It will be understood that the term "and/or" refers to one or more possible combinations of specified relevant items and includes such combinations.

The terms used in this specification are provided only to explain specific embodiments, but are not intended to restrict the present invention. A singular representation may include a plural representation unless it represents a definitely different meaning from the context.

Unless otherwise defined, all terms, including technical and scientific terms, used in this specification have the same meaning as commonly understood by a person having ordinary skill in the art to which the present invention pertains. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In addition, the terms "comprises" and "includes" described herein should be interpreted not to exclude other elements but to further include such other elements since the corresponding elements may be inherent unless mentioned otherwise.

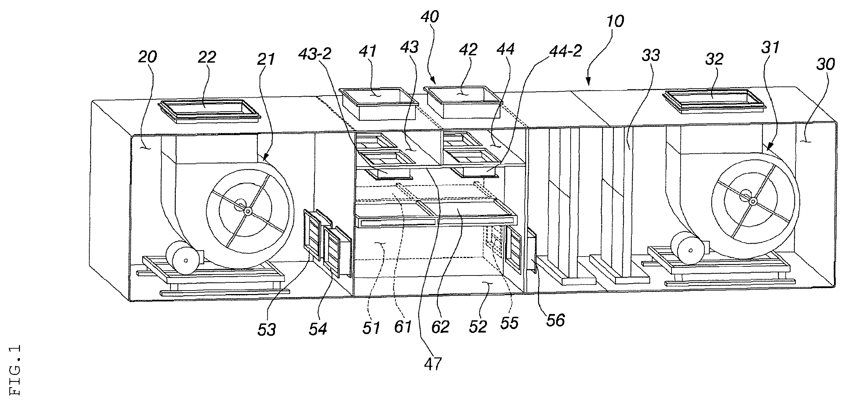

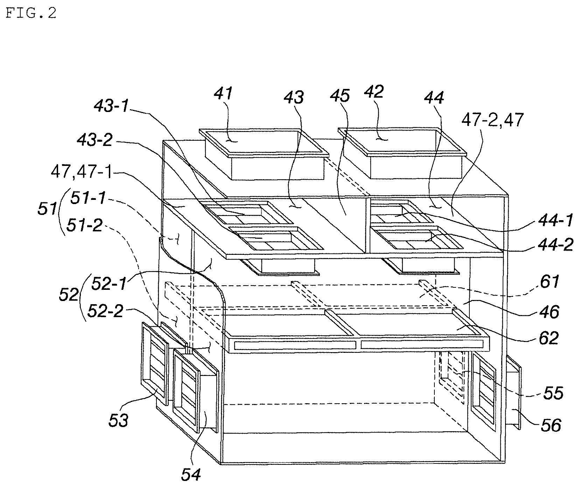

Referring to FIGS. 1 and 2, an air conditioner according to this embodiment includes a cabinet 10. The cabinet 10 includes an outdoor discharge chamber 20 for discharging air outdoors, an indoor discharge chamber 30 for discharging air indoors, and a suction chamber 40.

In the outdoor discharge chamber 20 is disposed an outdoor discharge fan 21 for discharging air in the outdoor discharge chamber 20 outdoors. The outdoor discharge chamber 20 is provided with an outdoor discharge port 22, which is connected to a duct (not shown).

In the indoor discharge chamber 30 is disposed an indoor discharge fan 31 for discharging air in the indoor discharge chamber 30 indoors. The indoor discharge chamber 30 is provided with an indoor discharge port 32, which is connected to a duct (not shown).

At least one selected from between outdoor air and indoor air may be introduced into the suction chamber 40. The suction chamber 40 is provided with an outdoor suction port 41, through which outdoor air is supplied, and an indoor suction port 42, through which indoor air is supplied.

The suction chamber 40 includes an outdoor suction selection chamber 43, which communicates with the outdoor suction port 41, and an indoor suction selection chamber 44, which communicates with the indoor suction port 42.

A selection chamber partition wall 45 is disposed in the suction chamber 40. The selection chamber partition wall 45 partitions the outdoor suction selection chamber 43 and the indoor suction selection chamber 44 from each other.

The selection chamber partition wall 45 partitions the outdoor suction selection chamber 43 and the indoor suction selection chamber 44 from each other in leftward and rightward directions. In this embodiment, the outdoor suction selection chamber 43 is disposed at the left side of the selection chamber partition wall 45, and the indoor suction selection chamber 44 is disposed at the right side of the selection chamber partition wall 45.

Hereinafter, the outdoor suction selection chamber 43 and the indoor suction selection chamber 44 are defined as suction selection chambers 43 and 44 for clarity of description.

The suction chamber 40 includes a first heat exchange chamber 51 and a second heat exchange chamber 52.

The first heat exchange chamber 51 is connected to the outdoor suction selection chamber 43 and to the indoor suction selection chamber 44.

The second heat exchange chamber 52 is connected to the outdoor suction selection chamber 43 and to the indoor suction selection chamber 44.

In the suction chamber 40 is disposed a heat exchange partition wall 46 for partitioning the first heat exchange chamber 51 and the second heat exchange chamber 52 from each other. The heat exchange partition wall 46 partitions the first heat exchange chamber 51 and the second heat exchange chamber 52 from each other in forward and rearward directions.

Hereinafter, the first heat exchange chamber 51 and the second heat exchange chamber 52 are defined as heat exchange chambers 51 and 52 for clarity of description.

The suction chamber 40 includes a damper partition wall 47 for partitioning the heat exchange chambers 51 and 52 and the suction selection chambers 43 and 44 from each other.

A portion of the damper partition wall 47 at which the outdoor suction selection chamber 43 is formed is defined as an outdoor damper partition wall 47-1, and a portion of the damper partition wall 47 at which the indoor suction selection chamber 44 is formed is defined as an indoor damper partition wall 47-2. In this embodiment, the outdoor damper partition wall 47-1 and the indoor damper partition wall 47-2 are formed integrally.

In this embodiment, the selection chamber partition wall 45 is disposed at the upper side of the damper partition wall 47, and the heat exchange partition wall 46 is disposed at the lower side of the damper partition wall 47. The damper partition wall 47 and the selection chamber partition wall 45 are coupled to each other, and the damper partition wall 47 and the heat exchange partition wall 46 are coupled to each other.

In this embodiment, the damper partition wall 47 is disposed horizontally. The suction selection chambers 43 and 44 are disposed at the upper side of the damper partition wall 47. The heat exchange chambers 51 and 52 are disposed at the lower side of the damper partition wall 47.

A first heat exchanger 61 is disposed in the first heat exchange chamber 51, and a second heat exchanger 62 is disposed in the second heat exchange chamber 52.

The first heat exchanger 61 and the second heat exchanger 62 are some of the parts that constitute a heat pump unit 60, which operates as a compressor or an evaporator through a heat pump cycle of a refrigerant.

The heat pump unit 60 includes the first heat exchanger 61, the second heat exchanger 62, a compressor (not shown), a four-way valve (not shown), and an expansion valve (not shown).

The first heat exchanger 61 and the second heat exchanger 62 operate as the compressor or the evaporator. A desiccant coating is formed on the surface of each of the first heat exchanger 61 and the second heat exchanger 62.

The desiccant coating is a material that is capable of absorbing moisture from the air and discharging the absorbed moisture into the air when heat is applied to the desiccant coating. The desiccant coating is a material that is generally used by those skill in the art, and therefore a detailed description thereof will be omitted.

The heat exchanger that is used as an evaporator and the heat exchanger that is used as a condenser discharge the absorbed moisture into the air.

In a case in which one selected from between the first heat exchanger 61 and the second heat exchanger 62 operates as an evaporator, the other operates as a condenser. In a case in which one selected from between the first heat exchanger 61 and the second heat exchanger 62 operates as a condenser, the other operates as an evaporator.

In this embodiment, the suction selection chambers 43 and 44 are disposed such that the suction selection chambers 43 and 44 are stacked on the heat exchange chambers 51 and 52.

The outdoor suction selection chamber 43 is stacked on one side (in this embodiment, the left side) of the heat exchange chambers 51 and 52. The indoor suction selection chamber 44 is stacked on the other side (in this embodiment, the right side) of the heat exchange chambers 51 and 52.

For example, in a case in which the outdoor suction selection chamber 43 and the indoor suction selection chamber 44 are disposed in the forward and rearward directions, as in this embodiment, the first heat exchange chamber 51 and the second heat exchange chamber 52 may be disposed in the leftward and rightward directions.

The outdoor suction selection chamber 43 is disposed so as to be at right angles to the first heat exchange chamber 51 and the second heat exchange chamber 52. The indoor suction selection chamber 44 is disposed so as to be at right angles to the first heat exchange chamber 51 and the second heat exchange chamber 52.

In addition, dampers are disposed to selectively open and close the respective chambers.

A first outdoor suction damper 43-1 for selectively opening and closing the outdoor suction selection chamber 43 and the first heat exchange chamber 51 and a second outdoor suction damper 43-2 for selectively opening and closing the outdoor suction selection chamber 43 and the second heat exchange chamber 52 are disposed in the outdoor damper partition wall 47-1.

A first indoor suction damper 44-1 for selectively opening and closing the indoor suction selection chamber 44 and the first heat exchange chamber 51 and a second indoor suction damper 44-2 for selectively opening and closing the indoor suction selection chamber 44 and the second heat exchange chamber 52 are disposed in the indoor damper partition wall 47-2.

The suction chamber 40 includes a first outdoor heat exchange damper 53 for selectively opening and closing the first heat exchange chamber 51 and the outdoor discharge chamber 20. The suction chamber 40 includes a second outdoor heat exchange damper 54 for selectively opening and closing the second heat exchange chamber 52 and the outdoor discharge chamber 20.

In addition, the suction chamber 40 includes a first indoor heat exchange damper 55 for selectively opening and closing the first heat exchange chamber 51 and the indoor discharge chamber 30. The suction chamber 40 includes a second indoor heat exchange damper 56 for selectively opening and closing the second heat exchange chamber 52 and the indoor discharge chamber 30.

The first heat exchanger 61 may be disposed between the first outdoor suction damper 43-1 and the first outdoor heat exchange damper 53. The first heat exchanger 61 may be disposed between the first indoor suction damper 44-1 and the first indoor heat exchange damper 55.

A plurality of first heat exchangers may be disposed in the first heat exchange chamber 51. In this embodiment, however, a single first heat exchanger 61 is disposed in the first heat exchange chamber 51.

The first heat exchanger 61 is horizontally disposed in the first heat exchange chamber 51. The first heat exchanger 61 partitions the first heat exchange chamber 51 in upward and downward directions. The first outdoor suction damper 43-1 and the first indoor suction damper 44-1 are located at the upper side of the first heat exchanger 61.

Consequently, air introduced into the first heat exchange chamber 51 through the first outdoor suction damper 43-1 may pass through the first heat exchanger 61, and may then be discharged through at least one selected from between the first outdoor heat exchange damper 53 and the first indoor heat exchange damper 55.

In addition, air introduced into the first heat exchange chamber 51 through the first indoor suction damper 44-1 may pass through the first heat exchanger 61, and may then be discharged through at least one selected from between the first outdoor heat exchange damper 53 and the first indoor heat exchange damper 55.

In the same manner, the second heat exchanger 62 may be disposed between the second outdoor suction damper 43-2 and the second outdoor heat exchange damper 54. The second heat exchanger 62 may be disposed between the second indoor suction damper 44-2 and the second indoor heat exchange damper 56.

A plurality of second heat exchangers may be disposed in the second heat exchange chamber 52. In this embodiment, a single second heat exchanger 62 is disposed in the first heat exchange chamber 51.

The second heat exchanger 62 is horizontally disposed in the second heat exchange chamber 52. The second heat exchanger 62 partitions the second heat exchange chamber 52 in upward and downward directions. The second outdoor suction damper 43-2 and the second indoor suction damper 44-2 are located at the upper side of the second heat exchanger 62.

Consequently, air, introduced into the second heat exchange chamber 52 through the second outdoor suction damper 43-2, may pass through the second heat exchanger 62, and may then be discharged through at least one selected from between the second outdoor heat exchange damper 54 and the second indoor heat exchange damper 56.

In addition, air, introduced into the second heat exchange chamber 52 through the second indoor suction damper 44-2, may pass through the second heat exchanger 62, and may then be discharged through at least one selected from between the second outdoor heat exchange damper 54 and the second indoor heat exchange damper 56.

In this embodiment, the upper region of the first heat exchange chamber 51 partitioned by the first heat exchanger 61 is defined as a first inlet chamber 51-1, and the lower region of the first heat exchange chamber 51 partitioned by the first heat exchanger 61 is defined as a first outlet chamber 51-2.

In this embodiment, the upper region of the second heat exchange chamber 52 partitioned by the second heat exchanger 62 is defined as a second inlet chamber 52-1, and the lower region of the second heat exchange chamber 52 partitioned by the second heat exchanger 62 is defined as a second outlet chamber 52-2.

The first inlet chamber 51-1 is connected to the outdoor suction selection chamber 43 and to the indoor suction selection chamber 44. The second inlet chamber 52-1 is connected to the outdoor suction selection chamber 43 and to the indoor suction selection chamber 44.

The first outlet chamber 51-2 is connected to the outdoor discharge chamber 20 and to the indoor discharge chamber 30. The second outlet chamber 52-2 is connected to the outdoor discharge chamber 20 and to the indoor discharge chamber 30.

The first outdoor suction damper 43-1, the first indoor suction damper 44-1, the second outdoor suction damper 43-2, and the second indoor suction damper 44-2 are opened and closed under the control of a controller. The first outdoor suction damper 43-1, the first indoor suction damper 44-1, the second outdoor suction damper 43-2, and the second indoor suction damper 44-2 may enable air to flow in the upward and downward directions.

The first outdoor heat exchange damper 53, the first indoor heat exchange damper 55, the second outdoor heat exchange damper 54, and the second indoor heat exchange damper 56 are opened and closed under the control of the controller. The first outdoor heat exchange damper 53, the first indoor heat exchange damper 55, the second outdoor heat exchange damper 54, and the second indoor heat exchange damper 56 may enable air to flow in the horizontal direction.

The opening degree of each damper may be adjusted, and the flow rate of air may be controlled by adjusting the opening degree of each damper. A damper motor (not shown) for adjusting the opening degree of each damper may be installed in each damper.

In the indoor discharge chamber 30 may be installed a filter 33 for filtering foreign matter from air.

In the indoor discharge chamber 30 may be installed a heater (not shown), which generates heat when powered on.

Hereinafter, the operation of the air conditioner according to the embodiment of the present invention will be described in more detail with reference to the accompanying drawings.

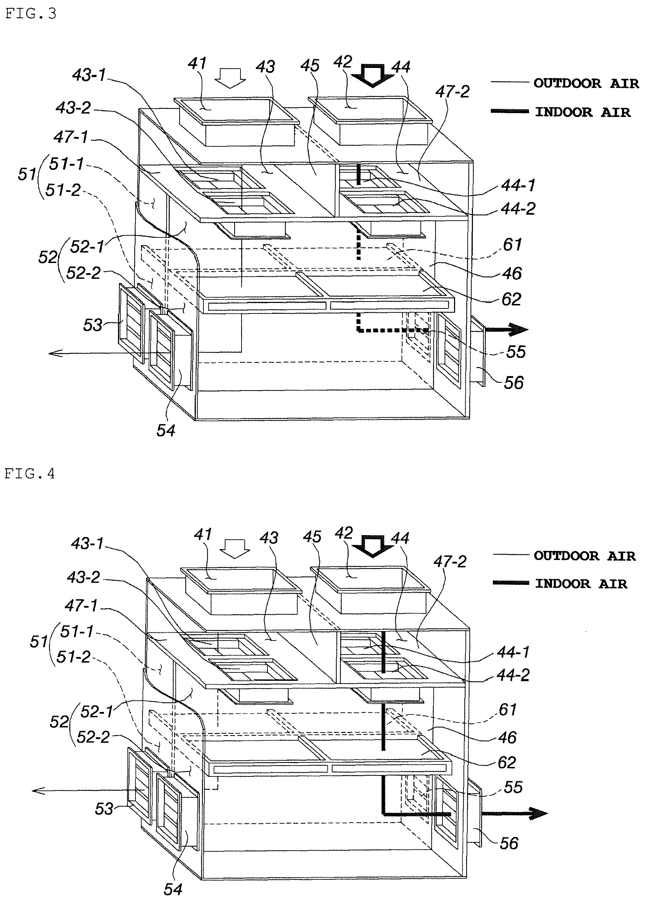

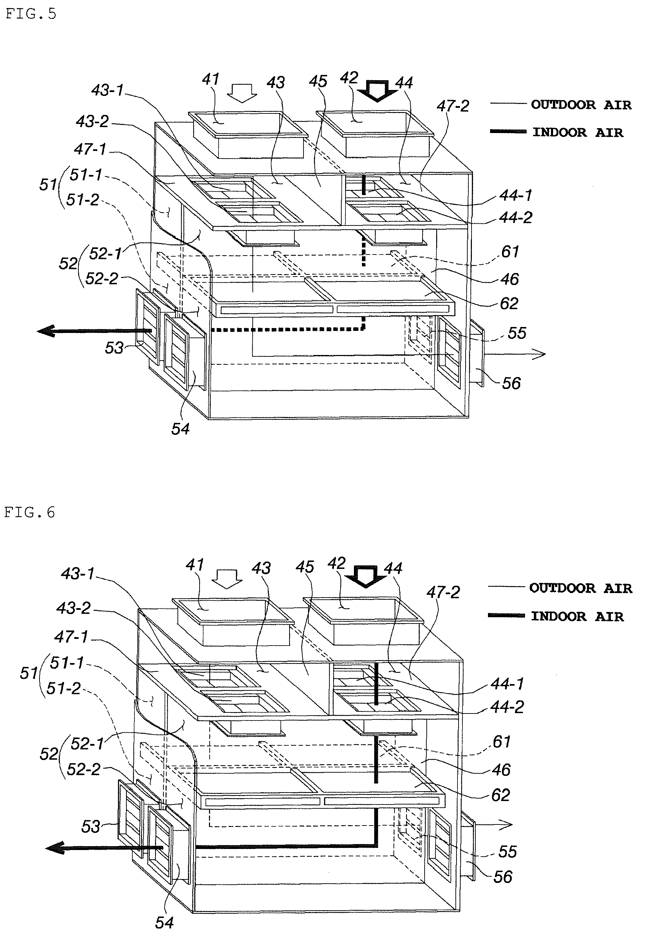

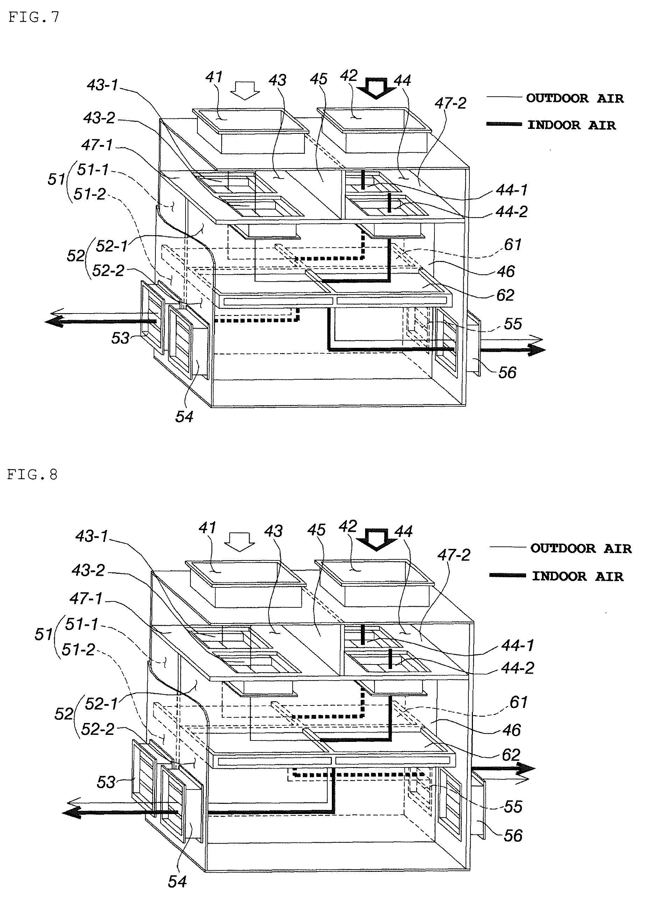

FIG. 3 is a view showing a first example in which the conditioner according to the first embodiment of the present invention operates in a circulation mode, FIG. 4 is a view showing a second example in which the conditioner according to the first embodiment of the present invention operates in the circulation mode, FIG. 5 is a view showing a first example in which the conditioner according to the first embodiment of the present invention operates in a ventilation mode, FIG. 6 is a view showing a second example in which the conditioner according to the first embodiment of the present invention operates in the ventilation mode, FIG. 7 is a view showing a first example in which the conditioner according to the first embodiment of the present invention operates in a mixed ventilation mode, and FIG. 8 is a view showing a second example in which the conditioner according to the first embodiment of the present invention operates in the mixed ventilation mode.

The air conditioner according to this embodiment suctions air through the outdoor suction port 41 and the indoor suction port 42, and then discharges the suctioned air through the outdoor discharge port 22 and the indoor discharge port 32.

### CIRCULATION MODE

First, a circulation mode, in which air suctioned outdoors is discharged outdoors and air suctioned indoors is discharged indoors, will be described with reference to FIG. 3 or 4.

In the circulation mode, indoor air is suctioned, and is then supplied indoors. At this time, the circulated air is conditioned. For example, the circulated air may be subjected to at least one selected from among dehumidification, humidification, heating, cooling, and cleaning.

In the circulation mode, outdoor air is not introduced indoors.

In the circulation mode, the indoor air passes through the first heat exchanger 61 or the second heat exchanger 62, and then flows indoors through the indoor discharge fan 31.

In a case in which a user wishes to dehumidify the indoor air when the air conditioner operates in the circulation mode, the indoor air passes through the heat exchanger operating as the evaporator, and then flows to the indoor discharge fan 31.

During heat exchange between the indoor air and the heat exchanger operating as the evaporator, moisture contained in the indoor air clings to the heat exchanger operating as the evaporator, with the result that the indoor air is dehumidified.

In a case in which the user wishes to humidify the indoor air when the air conditioner operates in the circulation mode, the indoor air passes through the heat exchanger operating as the condenser, and then flows to the indoor discharge fan 31.

During heat exchange between the indoor air and the heat exchanger operating as the condenser, moisture is evaporated from the desiccant coating formed on the surface of the heat exchanger operating as the condenser. The evaporated moisture flows to the indoor discharge fan 31 in a state of being contained in the indoor air.

The first heat exchanger 61 or the second heat exchanger 62 may operate as an evaporator or a condenser according to the heat pump cycle.

Since the extent of dehumidification or humidification attributable to the desiccant coating formed on the surface of each of the first heat exchanger 61 and the second heat exchanger 62 is limited, however, the function of the first heat exchanger 61 or the second heat exchanger 62 is switched when the dehumidification efficiency of the first heat exchanger 61 or the second heat exchanger 62 is reduced.

Consequently, the first heat exchanger 61 and the second heat exchanger 62 alternately operate as an evaporator or a condenser.

In the circulation mode, indoor air flows in the following sequence.
(1) 42 → 44-1 → 61 → 55 → 31
(2) 42 → 44-2 → 62 → 56 → 31

In the circulation mode, outdoor air flows in the following sequence.
(3) 41 → 43-2 -> 62 → 54 → 21
(4) 41 → 43-1 → 61 → 53 → 21

The indoor air flows in sequence (1), and, at the same time, the outdoor air flows in sequence (3). In addition, the indoor air flows in sequence (2), and, at the same time, the outdoor air flows in sequence (4).

### VENTILATION MODE

A ventilation mode, which is a mode in which all air suctioned outdoors is supplied indoors and all air suctioned indoors is discharged outdoors, will be described with reference to FIG. 5 or 6.

In the ventilation mode, indoor air is suctioned, and is then discharged outdoors. In addition, outdoor air is suctioned, and is then discharged indoors.

At this time, the outdoor air that is supplied indoors is conditioned. For example, the outdoor air may be subjected to at least one selected from among dehumidification, humidification, heating, cooling, and cleaning.

In the ventilation mode, the outdoor air passes through the first heat exchanger 61 or the second heat exchanger 62, and is then discharged indoors through the indoor discharge fan 31.

In a case in which the user wishes to dehumidify the outdoor air, the outdoor air passes through the heat exchanger operating as the evaporator, and then flows to the indoor discharge fan 31. During heat exchange between the outdoor air and the heat exchanger operating as the evaporator, moisture contained in the outdoor air clings to the heat exchanger operating as the evaporator, with the result that the outdoor air is dehumidified.

In a case in which the user wishes to humidify the outdoor air, the outdoor air passes through the heat exchanger operating as the condenser, and then flows to the indoor discharge fan 31. During heat exchange between the suctioned outdoor air and the heat exchanger operating as the condenser, moisture is evaporated from the desiccant coating formed on the surface of the heat exchanger operating as the condenser. The evaporated moisture flows to the indoor discharge fan 31 in a state of being contained in the outdoor air.

The first heat exchanger 61 or the second heat exchanger 62 may operate as an evaporator or a condenser depending on the heat pump cycle. The function of the first heat exchanger 61 or the second heat exchanger 62 is switched when the dehumidification or humidification efficiency of the first heat exchanger 61 or the second heat exchanger 62 is reduced.

In the ventilation mode, indoor air flows in the following sequence, and is then discharged outdoors.
(5) 42 → 44-1 → 61 → 53 → 21
(6) 42 → 44-2 → 62 → 54 → 21

In the ventilation mode, outdoor air flows in the following sequence, and is then supplied indoors.
(7) 41 → 43-2 → 62 → 56 → 31
(8) 41 → 43-1 → 61 → 55 → 31

The indoor air flows in sequence (5), and, at the same time, the outdoor air flows in sequence (7). In addition, the indoor air flows in sequence (6), and, at the same time, the outdoor air flows in sequence (8).

### MIXED VENTILATION MODE

A mixed ventilation mode, which is a mode in which outdoor air and indoor air are mixed, and then the mixed air is supplied indoors, will be described with reference to FIG. 7 or 8.

The mixed ventilation mode is characterized in that the outdoor air and the indoor air are mixed in the first inlet chamber 51-1 or the second inlet chamber 52-1.

A proportion of air to be discharged outdoors may be set based on user's selection. When the user selects a proportion of indoor air that is to be discharged, the opening degrees of the first indoor suction damper 44-1 and the second indoor suction damper 44-2 are adjusted.

For example, in a case in which the user sets a proportion of indoor air to be discharged outdoors to 30 %, the opening degree of the damper corresponding to the indoor air to be discharged outdoors may be set to 30 %, and the opening degree of the other damper may be set to 70 %.

Referring to FIG. 7, in a case in which the first indoor suction damper 44-1 is 30 % open, the second indoor suction damper 44-2 is 70 % open.

At this time, the first outdoor suction damper 43-1, which is configured to operate together with the first indoor suction damper 44-1, is 70 % open, and the second outdoor suction damper 43-2, which is configured to operate together with the second indoor suction damper 44-2, is 30 % open.

In this embodiment, in a case in which the user sets the amount of indoor air to be discharged, the controller automatically controls the opening degrees of the first indoor suction damper 44-1 and the second indoor suction damper 44-2.

In addition, when the opening degrees of the first indoor suction damper 44-1 and the second indoor suction damper 44-2 are set, the first outdoor suction damper 43-1 and the second outdoor suction damper 43-2, which are configured to operate together with the first indoor suction damper 44-1 and the second indoor suction damper 44-2, respectively, are also automatically set.

For convenience in use, the opening degree of each damper may be set to one of three different degrees, that is, a high degree, a middle degree, and a low degree, although the user can precisely adjust the opening degree of each damper.

For example, in a case in which the user selects the high degree of the mixed ventilation mode, the corresponding damper for discharging the indoor air may be controlled to be 70 % open.

In a case in which the user selects the middle degree of the mixed ventilation mode, the corresponding damper for discharging the indoor air may be controlled to be 50 % open.

In a case in which the user selects the low degree of the mixed ventilation mode, the corresponding damper for discharging the indoor air may be controlled to be 30 % open.

In addition to selecting the degree of the mixed ventilation mode, the user may select one from among various kinds of air conditioning, such as dehumidification, humidification, heating, cooling, and cleaning, for mixed air to be supplied indoors (hereinafter, defined as air discharged from the suction chamber 40 to the indoor discharge chamber 30).

For example, in a case in which the user selects dehumidification, the mixed air passes through the heat exchanger operating as the evaporator, and then moves to the indoor discharge chamber 30.

For example, in a case in which the user selects humidification, the mixed air passes through the heat exchanger operating as the condenser, and then moves to the indoor discharge chamber 30.

The first heat exchanger 61 or the second heat exchanger 62 may operate as an evaporator or a condenser depending on the heat pump cycle. The function of the first heat exchanger 61 or the second heat exchanger 62 is switched when the dehumidification or humidification efficiency of the first heat exchanger 61 or the second heat exchanger 62 is reduced.

In the mixed ventilation mode, the respective dampers 43-1, 43-2, 44-1, and 44-2, disposed in the outdoor suction selection chamber 43 and the indoor suction selection chamber 44, are opened, while the opening degrees of the respective dampers 43-1, 43-2, 44-1, and 44-2 are controlled.

The outdoor air and the indoor air that have passed through the respective dampers 43-1, 43-2, 44-1, and 44-2 are mixed in the first inlet chamber 51-1 or the second inlet chamber 52-1.

Subsequently, the air mixed in the first inlet chamber 51-1 may pass through the first heat exchanger 61, and may then flow to the first outdoor heat exchange damper 53 or the first indoor heat exchange damper 55.

In addition, the air mixed in the second inlet chamber 52-1 may pass through the second heat exchanger 62, and may then flow to the second outdoor heat exchange damper 54 or the second indoor heat exchange damper 56.

Referring to FIG. 7, the mixed air having exchanged heat with the second heat exchanger 62 is discharged indoors, and the mixed air having exchanged heat with the first heat exchanger 61 is discharged outdoors. The second heat exchanger 62 shown in FIG. 7 may operate as an evaporator or a condenser.

Referring to FIG. 8, the mixed air having exchanged heat with the first heat exchanger 61 is discharged indoors, and the mixed air having exchanged heat with the second heat exchanger 62 is discharged outdoors. The first heat exchanger 61 shown in FIG. 8 may operate as an evaporator or a condenser.

As is apparent from the above description, the air conditioner according to the present invention has one or more of the following effects.

First, the air conditioner according to the present invention has the effect of alternately operating a plurality of heat exchangers, each having a desiccant coating formed thereon, thereby effectively dehumidifying outdoor air or indoor air.

Second, the air conditioner according to the present invention has the effect of adjusting a proportion of outdoor air introduced indoors when discharging indoor air.

Third, the air conditioner according to the present invention has the effect of adjusting a proportion of outdoor air according to the user's selection and selecting one from among various kinds of air conditioning, such as dehumidification, humidification, heating, cooling, and cleaning, for mixed air to be supplied indoors.

It should be noted that effects of the present invention are not limited to the effects of the present invention as mentioned above, and other unmentioned effects of the present invention will be clearly understood by those skilled in the art from the following claims.

## Claims

1. An air conditioner comprising:
a suction chamber (40) provided with an indoor suction port (42), through which indoor air is suctioned, an outdoor suction port (41), through which outdoor air is suctioned, the suction chamber (40) being configured to selectively adjust a ratio of outdoor air to be suctioned to indoor air to be suctioned;
an outdoor discharge chamber (20) disposed at one side of the suction chamber (40), the outdoor discharge chamber (20) being provided with an outdoor discharge port (22) through which air in the suction chamber (40) is discharged outdoors; and
an indoor discharge chamber (30) disposed at the other side of the suction chamber (40), opposite to the outdoor discharge chamber (20), the indoor discharge chamber (30) being provided with an indoor discharge port (32), through which air in the suction chamber (40) is discharged indoors.

2. The air conditioner according to claim 1, wherein the suction chamber (40) comprises:
a first heat exchange chamber (51) having a first heat exchanger (61), operating as one selected from between an evaporator and a condenser, disposed therein, the first heat exchange chamber (51) being connected to the outdoor discharge chamber (20) and to the indoor discharge chamber (30);
a second heat exchange chamber (52) having a second heat exchanger (62), operating as the other selected from between the evaporator and the condenser, disposed therein, the second heat exchange chamber (52) being connected to the outdoor discharge chamber (20) and to the indoor discharge chamber (30);
an outdoor suction selection chamber (43) connected to the outdoor suction port (41) for allowing the outdoor air to be introduced thereinto and supplying the outdoor air to at least one selected from between the first heat exchange chamber (51) and the second heat exchange chamber (52); and
an indoor suction selection chamber (44) connected to the indoor suction port (42) for allowing the indoor air to be introduced thereinto and supplying the indoor air to at least one selected from between the first heat exchange chamber (51) and the second heat exchange chamber (52).

3. The air conditioner according to claim 2, wherein the suction chamber (40) further comprises:
a first outdoor suction damper (43-1) disposed between the outdoor suction selection chamber (43) and the first heat exchange chamber (51) for controlling a flow rate of outdoor air flowing from the outdoor suction selection chamber (43) to the first heat exchange chamber (51); and
a second outdoor suction damper (43-2) disposed between the outdoor suction selection chamber (43) and the second heat exchange chamber (52) for controlling a flow rate of outdoor air flowing from the outdoor suction selection chamber (43) to the second heat exchange chamber (52).

4. The air conditioner according to claim 2, or 3, wherein the suction chamber further comprises:
a first indoor suction damper (44-1) disposed between the indoor suction selection chamber (44) and the first heat exchange chamber (51) for controlling a flow rate of indoor air flowing from the indoor suction selection chamber (44) to the first heat exchange chamber (51); and
a second indoor suction damper (44-2) disposed between the indoor suction selection chamber (44) and the second heat exchange chamber (52) for controlling a flow rate of indoor air flowing from the indoor suction selection chamber (44) to the second heat exchange chamber (52).

5. The air conditioner according to claim 2, 3, or 4, wherein the suction chamber further comprises:
a first outdoor heat exchange damper (53) for selectively opening and closing the first heat exchange chamber (51) and the outdoor discharge chamber (20); and
a second outdoor heat exchange damper (54) for selectively opening and closing the second heat exchange chamber (52) and the outdoor discharge chamber (20).

6. The air conditioner according to any one of claims 2 to 5, wherein the suction chamber (40) further comprises:
a first indoor heat exchange damper (55) for selectively opening and closing the first heat exchange chamber (51) and the indoor discharge chamber (30); and
a second indoor heat exchange damper (56) for selectively opening and closing the second heat exchange chamber (52) and the indoor discharge chamber (30).

7. The air conditioner according to any one of claims 2 to 6, wherein the first heat exchange chamber (51) and the second heat exchange chamber (52) are partitioned from each other by a heat exchange partition wall (46).

8. The air conditioner according to any one of claims 2 to 7, wherein the first heat exchange chamber (51) is partitioned into a first inlet chamber (51-1) and a first outlet chamber (51-2) by the first heat exchanger (61), the first inlet chamber (51-1) being connected to the outdoor suction selection chamber (43) and to the indoor suction selection chamber (44), the first outlet chamber (51-2) being connected to the outdoor discharge chamber (20) and to the indoor discharge chamber (30).

9. The air conditioner according to any one of claims 2 to 8, wherein the second heat exchange chamber (52) is partitioned into a second inlet chamber (52-1) and a second outlet chamber (52-2) by the second heat exchanger (62), the second inlet chamber (52-1) being connected to the outdoor suction selection chamber (43) and to the indoor suction selection chamber (44), the second outlet chamber (52-2) being connected to the outdoor discharge chamber (20) and to the indoor discharge chamber (30).

10. The air conditioner according to claim 1, wherein the suction chamber (40) comprises:
a damper partition wall (47) for partitioning an interior of the suction chamber (40) into an upper part and a lower part such that suction selection chambers are formed in the upper part of the suction chamber (40) and heat exchange chambers are formed in the lower part of the suction chamber (40);
a selection chamber partition wall (45) coupled to an upper side of the damper partition wall (47) for partitioning the suction selection chambers into an outdoor suction selection chamber (43) and an indoor suction selection chamber (44) in opposite sideward directions; and
a heat exchange partition wall (46) coupled to a lower side of the damper partition wall (47) for partitioning the heat exchange chambers into a first heat exchange chamber (51) and a second heat exchange chamber (52) in forward and rearward directions, and wherein
the first heat exchange chamber (51) has a first heat exchanger (61), operating as one selected from between an evaporator and a condenser, disposed therein, the first heat exchange chamber (51) being connected to the outdoor discharge chamber (20) and to the indoor discharge chamber (30),
the second heat exchange chamber (52) has a second heat exchanger (62), operating as the other selected from between the evaporator and the condenser, disposed therein, the second heat exchange chamber (52) being connected to the outdoor discharge chamber (20) and to the indoor discharge chamber (30),
the outdoor suction selection chamber (43) is connected to the outdoor suction port (41) for allowing the outdoor air to be introduced thereinto and supplying the outdoor air to at least one selected from between the first heat exchange chamber (51) and the second heat exchange chamber (52), and
the indoor suction selection chamber (44) is connected to the indoor suction port (42) for allowing the indoor air to be introduced thereinto and supplying the indoor air to at least one selected from between the first heat exchange chamber (51) and the second heat exchange chamber (52).

11. The air conditioner according to claim 10, wherein
the outdoor suction selection chamber (43) is formed in the forward and rearward directions, the outdoor suction selection chamber (43) being stacked on upper sides of the first heat exchange chamber (51) and the second heat exchange chamber (52), and
the indoor suction selection chamber (44) is formed in the forward and rearward directions, the indoor suction selection chamber (44) being stacked on the upper sides of the first heat exchange chamber (51) and the second heat exchange chamber (52).

12. The air conditioner according to claim 10, or 11, wherein the suction chamber (40) further comprises:
a first outdoor suction damper (43-1) disposed in the damper partition wall (47) for selectively opening and closing the outdoor suction selection chamber (43) and the first heat exchange chamber (51);
a second outdoor suction damper (43-2) disposed in the damper partition wall (47) for selectively opening and closing the outdoor suction selection chamber (43) and the second heat exchange chamber (52);
a first indoor suction damper (44-1) disposed in the damper partition wall (47) for selectively opening and closing the indoor suction selection chamber (44) and the first heat exchange chamber (51); and
a second indoor suction damper (44-2) disposed in the damper partition wall (47) for selectively opening and closing the indoor suction selection chamber (44) and the second heat exchange chamber (52).

13. The air conditioner according to claim 12, wherein
an opening degree of the first outdoor suction damper (43-1) and an opening degree of the first indoor suction damper (43-1) are adjusted to adjust a mixing ratio of indoor air and outdoor air to be supplied to the first heat exchange chamber (51), and
an opening degree of the second outdoor suction damper (44-1) and an opening degree of the second indoor suction damper (44-2) are adjusted to adjust a mixing ratio of indoor air and outdoor air to be supplied to the second heat exchange chamber (52).

14. The air conditioner according to claim 10, wherein
the first heat exchange chamber (51) is partitioned into a first inlet chamber (51-1) and a first outlet chamber (51-2) by the first heat exchanger (61),
the first inlet chamber (51-1) being connected to the outdoor suction selection chamber (43) and to the indoor suction selection chamber (44), the first outlet chamber (51-2) being connected to the outdoor discharge chamber (20) and to the indoor discharge chamber (30), and
the second heat exchange chamber (52) is partitioned into a second inlet chamber (52-1) and a second outlet chamber (52-2) by the second heat exchanger (62),
the second inlet chamber (52-1) being connected to the outdoor suction selection chamber (43) and to the indoor suction selection chamber (44), the second outlet chamber (52-2) being connected to the outdoor discharge chamber (20) and to the indoor discharge chamber (30).

15. The air conditioner according to claim 14, wherein the suction chamber further (40) comprises:
a first outdoor heat exchange damper (53) for selectively opening and closing the first outlet chamber (51-2) and the outdoor discharge chamber (20);
a second outdoor heat exchange damper (54) for selectively opening and closing the second outlet chamber (52-2) and the outdoor discharge chamber (20);
a first indoor heat exchange damper (55) for selectively opening and closing the first outlet chamber (51-2) and the indoor discharge chamber (30); and
a second indoor heat exchange damper (56) for selectively opening and closing the second outlet chamber (52-2) and the indoor discharge chamber (30).
